# EUROPÄISCHE PATENTANMELDUNG

(11) **EP 1 465 044 A2**
(43) Veröffentlichungstag der Anmeldung: **06.10.2004**
(21) Anmeldenummer: 04004840.7
(22) Anmeldetag: 02.03.2004
(51) Int. Cl.: G06F 1/18

(54) **PC-Modul zum Einbau in eine Medienversorgung eines Laborraums**

(30) Priorität: 31.03.2003 DE 20305188 U
(71) Anmelder: Waldner Labor- und Schuleinrichtungen GmbH Dresden, 01097 Dresden (DE)
(72) Erfinder: Keibach, Dieter, 88267 Vogt (DE); Putz, Michael, 01219 Dresden (DE)
(74) Vertreter: Pohlmann, Eckart, Dipl.-Phys.

(57) **Zusammenfassung**

PC-Modul zum Einbau in eine einzelne Module aufweisende Medienversorgung eines Laborraums, mit einem Modulgehäuse (1) mit Abmessungen, die den Abmessungen der übrigen Module der Medienversorgung entsprechen und in dem die Komponenten eines Notebook-PCs in zueinander parallelen Ebenen übereinander aufgenommen sind, wobei sich auf dem Gehäuseboden (2) das Netzteil (3) und die Festplatte (4) des Notebook-PC sowie ein Converter (5) befinden, der die zum Betreiben der Komponenten des PCs sowie der Zusatzkomponenten wie einer Lüftung notwendigen Spannungen liefert, und über dem Converter (5) und der Festplatte (4) der Prozessor des Notebook-PCs angeordnet ist.

## Beschreibung

Die Erfindung betrifft einen PC-Modul zum Einbau in eine einzelne Module aufweisende Medienversorgung eines Laborraums.

Laborräume sind üblicherweise mit Medienversorgungseinrichtungen versehen, die dazu dienen, die einzelnen Arbeitsplätze im Laborraum mit den notwendigen Medien zu versorgen und die mit entsprechenden Abgriffen hierfür versehen sind. Medienversorgungen können an den einzelnen Arbeitsplätzen, für alle Arbeitsplätze als durchgehende Medienversorgungseinrichtungen, die unter der Decke des Laborraums und von dieser abgehängt verlaufen, vertikal an den Raumwänden oder freistehend an Mediensäulen oder in Form von Medienzellen vorgesehen sein.

Aus wirtschaftlichen Gründen und aus Gründen der Flexibilität ist es bevorzugt, eine Medienversorgung modular, das heißt mit Modulen für die verschiedenen Medien aufzubauen, die identische Abmessungen haben oder deren Abmessungen ein Vielfaches der Abmessungen eines Grundmoduls betragen, um die Module je nach Wunsch austauschen und kombinieren zu können sowie Module mit zusätzlichen Funktionen zusätzlich an beliebigen Stellen vorsehen zu können.

Der PC-Modul der eingangs genannten Art ist ein derartiger Modul mit zusätzlichen Funktionen, nämlich mit den Funktionen eines Personal Computers, dessen Schnittstellen mit beispielsweise einem Monitor, einer Tastatur, einer Maus, usw. einer PC-Anlage verbunden werden können, die sich am Arbeitsplatz selbst befinden. Es können weitere Schnittstellen für serielle Anschlüsse für Versuchsanordnungen vorgesehen sein. In dieser Weise ergibt es sich ein platzsparender Aufbau am Arbeitsplatz, da der eigentliche PC nicht dort, sondern in Form eines separaten Moduls in die Medienversorgung eingebaut ist.

Der erfindungsgemäße PC-Modul zeichnet sich durch ein Modulgehäuse mit Abmessungen aus, die den Abmessungen der übrigen Module der Medienversorgung entsprechen, und in dem die Komponenten eines Notebook-PCs in zueinander parallelen Ebenen übereinander aufgenommen sind, wobei sich auf dem Gehäuseboden das Netzteil und die Festplatte des Notebook-PC sowie ein Converter befinden, der die zum Betreiben der Komponente des PCs sowie der zusätzlichen Komponenten, wie einer Lüftung notwendigen Spannungen liefert, und über dem Converter und der Festplatte der Prozessor des Notebook-PCs angeordnet ist.

Besonders bevorzugte Weiterbildungen und Ausgestaltungen des erfindungsgemäßen PC-Moduls sind Gegenstand der Patentansprüche 2 bis 6.

Im Folgenden wird anhand der zugehörigen Zeichnung ein besonders bevorzugtes Ausführungsbeispiel des erfindungsgemäßen PC-Moduls näher beschrieben.

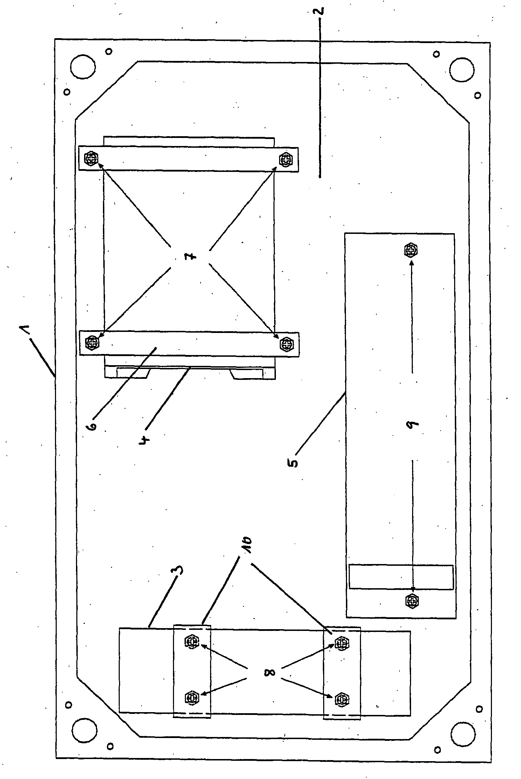

Die einzige Figur zeigt eine Draufsicht auf die offene Seite des Modulgehäuses sowie das Netzteil, die Festplatte und den Converter, die auf dem Boden des Modulgehäuses vorgesehen sind.

Wie es in der Zeichnung dargestellt ist, weist das Ausführungsbeispiel des erfindungsgemäßen PC-Moduls ein Modulgehäuse 1 mit einem Gehäuseboden 2 auf, das in Form einer nach oben offenen rechtwinkligen Schale ausgebildet ist.

Das Modulgehäuse 1 hat Abmessungen, die den Abmessungen der übrigen Module entsprechen, die in der Medienversorgung eines Laborraums vorgesehen sind, in die der PC-Modul einzubauen ist. Die Grundmodulabmessungen (Breite/Höhe/Tiefe) betragen beispielsweise 300/100/180 mm.

Dadurch, dass das Modulgehäuse des PC-Moduls die gleichen Abmessungen wie die übrigen Module der Medienversorgung hat, ist es möglich, den PC-Modul an verschiedenen Stellen der Medienversorgung vorzusehen und jederzeit umzusetzen.

Im Modulgehäuse 1 sind die Bauteile eines Notebook-PCs sowie weitere zusätzliche Bauteile aufgenommen, die für den PC-Modul erforderlich sind.

Wie es in der Zeichnung dargestellt ist, befinden sich auf dem Gehäuseboden 2 ein Netzteil 3, das bei einem Notebook-PC außerhalb des Gehäuses angeordnet ist, eine Festplatte 4 sowie ein Converter 5, der beispielsweise Spannungen von 12 V, 5 V und 3,3 V zum Betreiben der Komponenten des PCs sowie der zusätzlich vorgesehenen Komponenten wie beispielsweise einer Lüftung liefert.

Das Netzteil 3 liegt an der elektrischen Versorgung der Medienversorgung und liefert eine Ausgangsspannung von beispielsweise 12 V, die unter anderem als Eingangsspannung am Converter 5 liegt.

Der Prozessor, das heißt die Prozessorkarte oder das Mainboard des Notebook-PCs ist in einer zur Ebene des Gehäusebodens 2 parallelen Ebene über dem Netzteil 4 und dem Converter 5 angeordnet und die weiteren Bauteile des PC-Moduls befinden sich in einer weiteren hierzu parallelen Ebene über dem Prozessor.

Wie es weiterhin in der Zeichnung dargestellt ist, ist die Festplatte 4 nicht wie bei einem üblichen Notebook-PC an den Seiten des Gehäuses verschraubt sondern am Gehäuseboden befestigt und zwar mittels zweier Bügel 6, die seitlich auf der Festplatte angeordnet sind und über Polsterungen mit vier Schrauben 7 im Gehäuseboden 2 verschraubt sind.

Die Schrauben sind mit Muttern und Unterlegscheiben fest mit dem Gehäuseboden 2 verbunden, können jedoch für Wartungs- und Reparaturarbeiten an der Festplatte 4 gelöst werden.

Die Festplatte 4 ist über ein AT-Adapterkabel 43polig auf 40polig IDE angeschlossen, ihre Stromversorgung kommt direkt über einen 4poligen AT-Stecker.

Das Netzteil 5, das bei einem Notebook außerhalb des Gehäuses als Standgerät mit Direktanschluss an das zu versorgende Gerät angeordnet ist, ist gleichfalls auf dem Gehäuseboden angebracht.

Es ist über zwei flexible Befestigungsstreifen 10 mit Klettverschluss gehalten, die über Schrauben 8 mit Muttern und Unterlegscheiben fest mit dem Gehäuseboden 2 verbunden sind. Für Wartungs- und Reparaturarbeiten am Netzteil 3 können die Klettverschlüsse gelöst werden, um das Netzteil 3 entfernen zu können.

Die Spannungszuführung zum Netzteil 3 erfolgt mit einer Spannung von beispielsweise 230 V und einer Anschaltung direkt an das elektrische Netz der Medienversorgung. Das Netzteil 3 liefert eine Ausgangsspannung von beispielsweise 12 V für den DC-Converter 5.

Der DC-Converter 5, der bei einem üblichen Notebook-PC nicht vorgesehen ist, dient zu Spannungsstabilisierung und zur Aufteilung der Eingangsspannung und liefert Ausgangsspannungen von beispielsweise 12 V, 5 V und 3,3 V für die verschiedenen Komponenten des PCs sowie für die Zusatzkomponenten wie beispielsweise die Lüftung usw.

Der Converter 5 ist über zwei Schrauben 9 mit Muttern und Unterlegscheiben am Gehäuseboden 2 befestigt und mit diesem verschraubt. Für Wartungs- und Reparaturarbeiten ist der Converter 5 durch Lösen der Schraubverbindungen jedoch leicht zu entfernen.

Die Spannungszuführung von 12 V kommt vom Netzteil 3, die Ausgangsspannungen liegen an einem ATX-Stecker, der über eine flexible ATX-Verlängerung auf das Mainboard, das heißt den Prozessor geführt ist.

Der erfindungsgemäße PC-Modul ist somit zum Einbau und zur Nutzung der Komponenten eines Notebooks konzipiert, woraus eine geringe Leistungsaufnahme der Komponenten resultiert, die für den Einsatz in transportablen Einheiten zwingend erforderlich ist. Aufbau und Anordnung der Komponenten des PC-Moduls sind derart gewählt, dass trotz einer stabilen Befestigung die Möglichkeit eines Ein- und Ausbaus für Wartungs- und Reparaturzwecke gegeben ist und alle Komponenten innerhalb des beschränkten Raumes eines Standardmoduls einer Medienversorgung aufgenommen werden können. Um dabei Kontakte der Komponenten miteinander zu verhindern, sind an einigen Komponenten zusätzliche Isolierungen vorgesehen.

Der Aufbau des oben beschrieben PC-Moduls erfolgte in der folgenden Weise:

In das Modulgehäuse 1 wird zunächst das Netzteil 3 eingesetzt und über die Schrauben 8 und die Klettstreifen 10 auf dem Gehäuseboden 2 befestigt. Danach erfolgt der Einbau des Converters 5, der über die Schrauben 9 mit dem Gehäuseboden 2 verschraubt wird. Anschließend wird die Festplatte 4 über die Bügel 6 und die Schrauben 7 auf dem Gehäuseboden 2 befestigt.

In einer zum Gehäuseboden parallelen Ebene wird anschließend das Mainboard, das heißt der Prozessor so angeordnet, dass er sich über dem Converter 5 und der Festplatte 4 befindet.

Die übrigen Bauteile, beispielsweise die Lüftungen, die Stecker, usw. werden in einer weiteren hierzu parallelen Ebene angeordnet.

Das Modulgehäuse 1 wird anschließend mit einem Deckel verschlossen, der mit entsprechenden Aussparungen für die Stecker und die Bedienungsknöpfe sowie Lüftungsöffnungen für die Lüftungen versehen ist.

Der in dieser Weise fertiggestellte PC-Modul wird in die Medienversorgung an der gewünschten Stelle eingebaut und mit der hier vorgesehenen elektrischen Versorgung verbunden.

## Patentansprüche

1. PC-Modul zum Einbau in eine einzelne Module aufweisende Medienversorgung eines Laborraums, **gekennzeichnet durch** ein Modulgehäuse (1) mit Abmessungen, die den Abmessungen der übrigen Module der Medienversorgung entsprechen und in dem die Komponenten eines Notebook-PCs in zueinander parallelen Ebenen übereinander aufgenommen sind, wobei sich auf dem Gehäuseboden (2) das Netzteil (3) und die Festplatte (4) des Notebook-PC sowie ein Converter (5) befinden, der die zum Betreiben der Komponenten des PCs sowie der Zusatzkomponenten wie einer Lüftung notwendigen Spannungen liefert, und über dem Converter (5) und der Festplatte (4) der Prozessor des Notebook-PCs angeordnet ist.

2. PC-Modul nach Anspruch 1, **dadurch gekennzeichnet, dass** das Netzteil (3), die Festplatte (4) und der Converter (5) mit dem Gehäuseboden (2) verschraubt sind.

3. PC-Modul nach Anspruch 2, **dadurch gekennzeichnet, dass** die Festplatte (4) mit zwei seitlich über der Festplatte (4) angeordneten Bügeln (6), deren Enden mit dem Gehäuseboden (2) verschraubt sind, am Gehäuseboden (2) befestigt ist.

4. PC-Modul nach Anspruch 3, **dadurch gekennzeichnet, dass** die Befestigung der Festplatte (4) mit einer Polsterung versehen ist.

5. PC-Modul nach Anspruch 2, **dadurch gekennzeichnet, dass** das Netzteil (3) mit Klettstreifen (8), die mit dem Gehäuseboden (2) verschraubt sind, am Gehäuseboden (2) befestigt ist.

6. PC-Modul nach Anspruch 1, **dadurch gekennzeichnet, dass** der Converter (5) so ausgelegt ist, dass er Ausgangsspannungen von 12 V, 5 V und 3,3 V liefert.
